# EUROPÄISCHE PATENTANMELDUNG

(11) **EP 2 211 138 A2**
(43) Veröffentlichungstag der Anmeldung: **28.07.2010**
(21) Anmeldenummer: 10000578.4
(22) Anmeldetag: 21.01.2010
(51) Int. Cl.: G01B 5/06, G01B 11/06

(54) **Einrichtung zur Dickenmessung**

(30) Priorität: 22.01.2009 CH 962009
(71) Anmelder: Steinemann Technology AG, 9015 St. Gallen (CH)
(72) Erfinder: Thöny, Nico, 7208 Malans/GR (CH)
(74) Vertreter: Arat, Dogan

(57) **Zusammenfassung**

Die Erfindung betrifft eine Einrichtung zur Dickenmessung, insbesondere zur Dickenmessung von flächigen, ebenen Bauelementen, z. B. aus Holz bzw. Holzwerkstoffen, die insbesondere in Breitbandschleifmaschine zum Bearbeiten von Oberflächen solcher Bauelemente verwendbar sind. Sie umfasst gegeneinander gerichtete Sensoren (1, 2) mit einer drehbaren Rolle 6 an dem, dem Bauelement zugewandten Ende sowie einen mit einem Lichtstrahl beaufschlagbaren CCD-Zeilensensor (8).

## Beschreibung

Die Erfindung betrifft eine Einrichtung zur Dickenmessung, insbesondere zur Dickenmessung von flächigen, ebenen Bauelementen, z. B. aus Holz bzw. Holzwerkstoffen, die insbesondere in Breitbandschleifmaschine zum Bearbeiten von Oberflächen solcher Bauelemente verwendbar sind.

Breitschleifmaschinen zum Bearbeiten von Oberflächen von insbesondere flächigen, ebenen Bauelementen aus Holz bzw. Holzwerkstoffen, Metallplatten, Platten aus Kunststoff oder Gummi oder auch Papierbahnen haben sich als eigenständige Gattung von Schleifmaschinen etabliert. Sie enthalten in einem Maschinenständer (wie er z. B. in der EP-B-1144156 der Anmelderin offenbart ist) einen oder mehrere Schleifköpfe mit jeweils einem Schleifband, welches endlos um eine Schleifwalze und eine Spannwalze umläuft. Der mindestens eine Schleifkopf und dessen Antriebsmotor sind über einen Querträger am Maschinenständer befestigt.

Zur Ermittlung von Plattendicken und Dicken zu bearbeitender ebener und flacher Gegenstände werden häufig Sensoren mit Rollen verwendet. So beschreibt die WO-A-94/10530 eine Vorrichtung zur Messung von Schichtdicken mittels einer beweglich gelagerten Messrolle, die auf die Schicht aufgelegt wird, wobei die während der Bewegung der mit der Schicht versehenen Fläche infolge der Bewegung erzeugte Auslenkung der Messrolle mit einem, ein Ausgangssignal generierenden Sensor erfasst wird, das als ein Parameter zur Bestimmung der Schichtdicke verwendet wird.

In der DE-C-3133818 ist eine Dickenmessvorrichtung für Dickenmessungen an Platten mit einem Wegaufnehmer und einem Fühler mit Abtastrolle. Der Fühler ist mit der Abtastrolle in einer, mit einer doppelt wirkenden, zum Fühler koaxialen Zylinderkolbenanordnung ausgerüsteten Halterung auf- und niederbewegbar geführt und betätigt den Wegaufnehmer.

Zur Dickenmessung plattenförmiger Gegenstände sind auch Sensoren so angeordnet, dass einer über der zu messenden Platte und einer unter der zu messenden Platte montiert ist. Beim Messvorgang werden die Sensoren gegeneinander auf den Gegenstand hin verfahren, bis die Rollen auf dessen Oberfläche auftreffen und Rollbewegungen ausführen können.

Der verbleibende Abstand zwischen den Rollen wird als Dicke des Gegenstandes ebenfalls mittels Lichtquelle und Glasmassstab an einem der Sensoren abgelesen. Glasmassstäbe sind aufwändig in der Herstellung und anfällig auf umgebenden Schleifstaub.

Der Erfindung liegt die Aufgabe zugrunde, eine Einrichtung zur Dickenmessung, insbesondere zur Dickenmessung von flächigen, ebenen Bauelementen zu schaffen, die eine zuverlässige und günstige Dickenmessung ermöglicht. Die Aufgabe ist mit den Merkmalen des Patentanspruchs 1 gelöst.

Durch die Anordnung eines Zeilensensors an einem der Sensoren, dem eine übliche Lichtquelle zugeordnet ist, steht eine kostengünstige Messanordnung zur Verfügung.

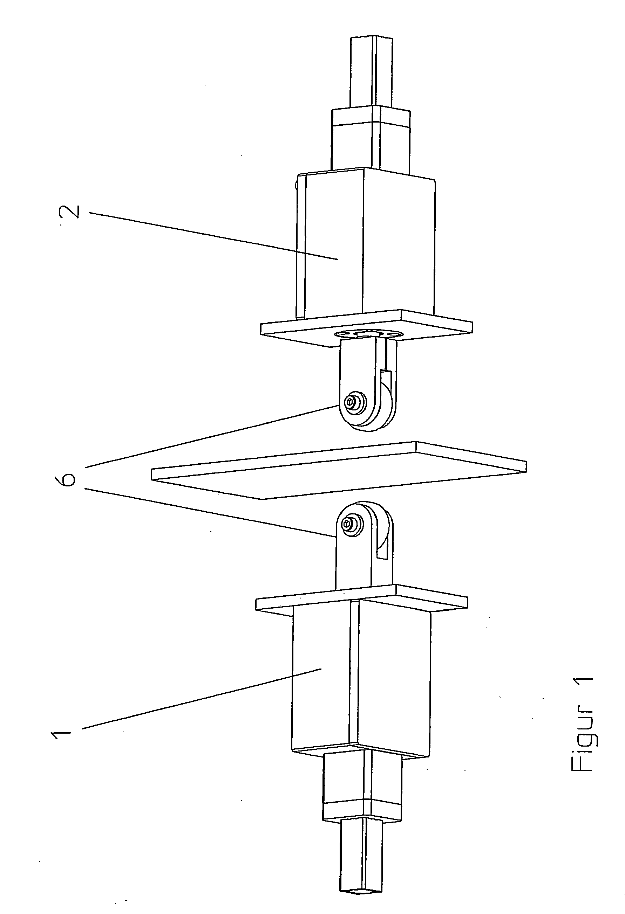

Die Erfindung wird nachfolgend in einem Ausführungsbeispiel anhand einer Zeichnung näher beschrieben. In der Zeichnung zeigen die
Fig. 1: die Anordnung einer Messspur

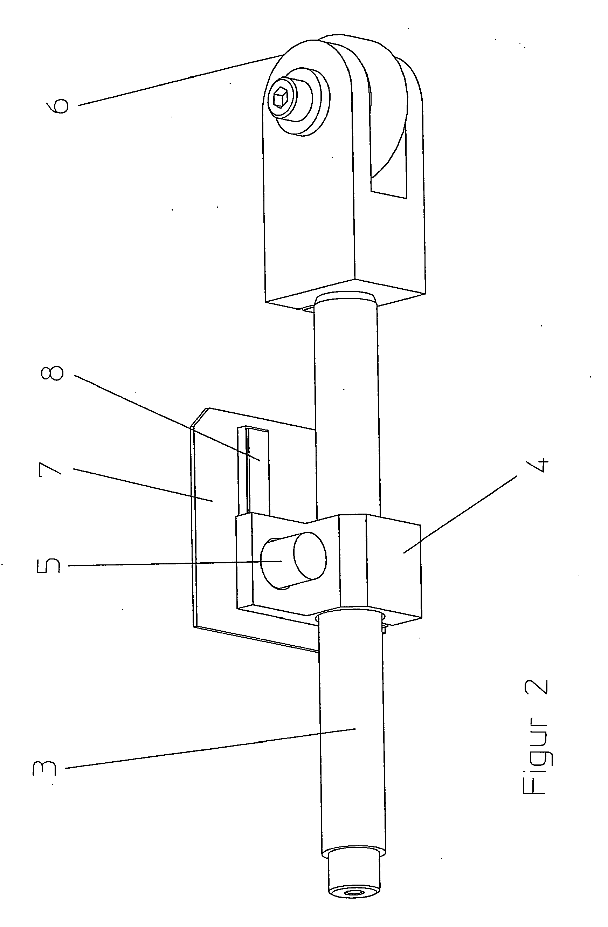

Fig. 2: einen Sensor.

Zur Dickenmessung z. B. einer zu schleifenden Spanplatte sind in einer nicht dargestellten Bandschleifmaschine zwei Sensoren 1, 2 in einer Achse angeordnet, wobei ein Sensor 1 über der zu messenden Spanplatte und der andere Sensor 2 unterhalb der Spanplatte angeordnet ist. Die Sensoren 1, 2 sind mit Rollen 6 versehen, die in Ruhestellung einige Millimeter zurückversetzt sind. Bei einem Messvorgang werden die Rollen 6 der Sensoren 1, 2 mit einer definierten Kraft pneumatisch zusammengefahren und so auf die jeweilige Plattenoberfläche gedrückt (für einen Kalibriervorgang werden die Rollen 6 zusammengefahren, bis sie sich gegenseitig berühren).

Eine Sensorelektronik 7 mit einem CCD-Zeilensensor 8 ist in einem Gehäuse fixiert. An einer Kolbenstange 3 ist eine Halterung 4 für eine Lichtquelle mit Tubus und Schlitzblende (Leuchtdiode 5) angeordnet. Die Lichtquelle bewegt sich über Dioden des Zeilensensors 8.

Der CCD-Zeilensensor 8 besteht aus einer Zeile lichtempfindlicher Dioden, die in Linie angeordnet sind.

Eine Ansteuerungseinheit der Sensorelektronik 7 liest den CCD-Zeilensensor 8 aus und prüft, welche Pixel/Diode belichtet sind. Diese Information beinhaltet die Angaben zur Dicke der Spanplatte. Die Leuchtdiode 5 belichtet die Diodenanordnung des CCD-Zeilensensors 8, wobei Tubus und Schlitzblende den Lichtstrahl soweit fokussieren, dass möglichst nur ein Pixel/Diode beleuchtet wird.

Ein auf den CCD-Zeilensensor 8 projizierter Lichtstrahl wandert entsprechend der Auslenkung eines Kolbens resp. der Kolbenstange 3 mit, was eine Signaländerung am Ausgang des CCD-Zeilensensors 8 bewirkt, die wiederum von der Sensorelektronik erfasst und an die Maschinensteuerung weitergegeben wird. Diese Weginformation ist direkt proportional zur Position der Rolle 6 und wird der Maschinensteuerung zur Verfügung gestellt. Die effektive Dicke der Spanplatte resultiert aus der Differenz der Sensorsignale von oberer und unterer Rolle 6.

### Bezugszeichen

- 1: Sensor
- 2: Sensor
- 3: Kolbenstange
- 4: Halterung
- 5: Leuchtdiode
- 6: Rolle
- 7: Sensorelektronik
- 8: CCD-Zeilensensor

## Patentansprüche

1. Einrichtung zur Dickenmessung, insbesondere zur Dickenmessung von flächigen, ebenen Bauelementen, umfassend mindestens einen Sensor (1, 2) mit einer drehbaren Rolle 6 an dem, dem Bauelement zugewandten Ende, sowie einen mit einem Lichtstrahl beaufschlagbaren Massstab, **dadurch gekennzeichnet, dass** der Massstab ein CCD-Zeilensensor (8) ist.

2. Einrichtung nach Anspruch 1, **dadurch gekennzeichnet, dass** sie zwei gegeneinander gerichtete und bewegbare Sensoren (1, 2) umfasst.

3. Einrichtung nach Anspruch 1oder 2, **dadurch gekennzeichnet, dass** ein Licht erzeugendes Element an einer Kolbenstange (3) des Sensors (1, 2) angeordnet ist, wobei eine Relativbewegung zwischen CCD-Zeilensensor (8) und der Lichtquelle erfolgt.
